# EUROPÄISCHE PATENTANMELDUNG

(11) **EP 1 857 396 A1**
(43) Veröffentlichungstag der Anmeldung: **21.11.2007**
(21) Anmeldenummer: 06025261.6
(22) Anmeldetag: 06.12.2006
(51) Int. Cl.: B65H 75/44, H02G 11/02

(54) **Führung für ein Kabel oder einen Schlauch zur Befestigung an einer Kabeltrommel**

(30) Priorität: 19.05.2006 DE 202006008140 U
(71) Anmelder: Goerke, Ulla, 30900 Weber (DE); Goerke, Mike, 30900 Wedemark (DE)
(72) Erfinder: Goerke, Ulla, D-30900 Wedemark (DE)
(74) Vertreter: Bremer, Ulrich

(57) **Zusammenfassung**

Die Erfindung betrifft eine Führung (6) für ein Kabel (4) oder einen Schlauch, zur Anbringung an einer Kabel- oder Schlauchtrommel (1), wobei die Führung (6) aufweist:
zwei Befestigungsmittel (7) zur Befestigung an einem in Querrichtung verlaufenden Standfuß (3.4) der Kabeltrommel (1),
einen Bügelbereich (9), zur Anlage des Kabels (4) oder Schlauchs, wobei der Bügelbereich (9) die Befestigungsmittel (7) verbindet und zwischen dem Bügelbereich (9) und dem aufzunehmenden Standfuß (3.4) eine Durchlassöffnung (16) führ das Kabel (4) oder den Schlauch gebildet ist,

wobei die Kabelführung (6) aus zwei Halbschalen (6.1, 6.2) ausgebildet ist, die sich jeweils über den Bügelbereich (9) und die Befestigungsmittel (7) erstrecken.

Vorteilhafterweise können in der Kabelführung (6) Aufnahmebohrungen (14) zur Aufnahme von Steckerstiften (5.1) des Steckers (5) ausgebildet sein.

## Beschreibung

Die Erfindung betrifft eine Führung für ein Kabel oder einen Schlauch zur Befestigung an einer Kabeltrommel.

Eine derartige Führung ist z.B. in der DE 101 15 664 C2 gezeigt. Sie wird an der Kabeltrommel angebracht und dient dazu, das aufgenommene Kabel beim Auf- und Abwickeln zu führen, so dass das Kabel nicht von der Trommel bzw. deren Haspel abgleitet.

Hierbei sind unterschiedliche Systeme von Kabelführungen bekannt, z.B. die in der DE 101 15 664 C2 gezeigte Führung durch einen aufgehängten Ring oberhalb der Haspel, oder auch im unteren Bereich der Kabeltrommel bzw. des Kabelführungstrommel-Gestells vorgesehene Kabelführungen, die in der Regel ein seitliches Einsetzen und Herausnehmen des Kabels ermöglichen.

Derartige Kabelführungen sind jedoch im Allgemeinen teuer in der Herstellung, zum Teil komplex an der Kabeltrommel bzw. deren Gestell anzubringen und gewährleisten oftmals keine sichere Führung der Kabel.

Weiterhin bleibt bei Aufnahme eines Kabels mit Stecker in der Regel der Stecker lose vor baumelnd der Kabelführung hängen und kann beim Transport gegen andere Objekte oder auch den Benutzer stoßen. Der herunter baumelnde Stecker zieht hierbei permanent oder auch ruckweise am Kabel, was das Abwickeln beschleunigt. Auch eine Korrosion der Steckerstifte ist nicht ausgeschlossen.

Der Erfindung liegt die Aufgabe zugrunde, eine Führung für ein Kabel oder einen Schlauch, zur Anbringung an einer Kabeltrommel, zu schaffen, die eine sichere Führung des aufgenommenen Kabels/Schlauchs gewährleistet und kostengünstig herzustellen und anzubringen ist.

Diese Aufgabe wird durch eine Führung nach Anspruch 1 gelöst. Die Unteransprüche beschreiben bevorzugte Weiterbildungen.

Der Erfindung liegt der Gedanke zugrunde, die Kabelführung mittels zweier Befestigungsmittel, vorzugsweise Schellenbereiche, an einem Standfuß der Kabeltrommel fest anzubringen und somit ein seitliches Ausgleiten des Kabels bzw. Schlauchs sicher zu verhindern. Die Befestigungsmittel sind hierbei über einen vorzugsweise C-förmigen Bügelbereich miteinander verbunden, der vorteilhafterweise in seinen Seitenbereichen durch geeignete Rundungen eine sichere Führung ohne Umherspringen des Kabels bzw. Schlauchs ermöglicht.

Die erfindungsgemäße Kabeltrommel wird hierbei aus zwei Halbschalen hergestellt, z.B. aus Kunststoff. Die Halbschalen können hierbei im Spritzgussverfahren identisch hergestellt werden, so dass lediglich ein Werkzeug erforderlich ist und die Herstellungskosten somit gering sind. Nachfolgend können gegebenenfalls eine oder beide Halbschalen etwas verändert werden, z.B. durch Aufdruck eines Firmenlogos auf die vordere Halbschale.

Die Befestigung der Halbschalen erfolgt vorteilhafterweise über Schraubverbindungen, wobei direkt Holzschrauben bzw. selbstsichernde Schrauben ohne Muttern in geeignete Schraubenbohrungen eingeschraubt werden können. Somit wird eine ästhetisch hochwertig aussehende Verbindung erreicht. Die Halbschalen nehmen hierbei den Standfuß der Kabeltrommel zwischen sich auf, so dass eine sichere Befestigung bei der Verbindung der Halbschalen miteinander erreicht wird.

Die erfindungsgemäße Kabelführung kann insbesondere durch die Umlenkung des Kabels die Reibung gegenüber einem selbsttätigen Abwickeln nach unten erhöhen und das Abwickeln hierdurch erschweren.

Gemäß einer besonders bevorzugten Ausführungsform der Führung als Kabelführung sind in ihrem Bügelbereich oder einem sich anschließenden Bereich Aufnahmebohrungen für Steckerstifte des am Ende des Kabels befindlichen Steckers vorgesehen. Die Aufnahmebohrungen können sich insbesondere vertikal durch den Bügelbereich, z.B. durch eine Verdickung des Bügelbereichs erstrecken. Somit wird eine definierte, sichere und die Steckerstifte schützende Aufnahme des Steckers ohne Verwendung zusätzlicher Mittel außer der Kabelführung ermöglicht. Beim Aufrollen des Kabels wird dieses somit erfindungsgemäß gestoppt, so dass - anders als bei herkömmlichen Kabelführungen, die ein Durchgleiten des Steckers ermöglichen - der Stecker nicht unbeabsichtigt vollständig durch die Kabelführung gezogen werden kann und daher vom Benutzer bei der nächsten Benutzung nicht erst wieder umständlich durch die Kabelführung zu fädeln ist.

Durch die erhöhte Aufnahme in den Aufnahmebohrungen sind die Steckstifte auch z. B. vor einem Schlammbad von einigen cm Höhe geschützt.

Die Aufnahmebohrungen/ Einstecklöcher für die Steckerstifte erschweren hierbei auch das selbsttätige Abwickeln, das bei herkömmlichen Kabeltrommeln aufgrund des Eigengewichtes des Steckers auftritt. Gemäß dieser Ausführungsform zieht der Stecker nicht mehr nach unten.

An der erfindungsgemäßen Kabeltrommel kann weiterhin eine Bremse vorgesehen sein, die die Drehung der Haspel durch Reibung bremst. Die Bremse kann insbesondere zwischen einem Stange oder Standfuß und der Haspel verschiebbar angebracht sein. Hierbei ergibt sich insbesondere ein synergistischer Effekt mit der Kabelführung, die Einstecklöcher aufweist, da die Bremse bereits allgemein die Reibung erhöht und insbesondere ein Abrollen bremst, wobei die erfindungsgemäße Kabelführung auch ohne die Aufnahmebohrungen/Einstecklöchern bereits ein Aufrollen vollständig stoppen kann, wenn die durch die Kabelführung gebildete geschlossene Öffnung den Stecker nicht durchlässt. Hierdurch wird auch ein Abwickeln ohne Haspeldrehung, wie es bei einer Bremse an der Haspel zunächst noch auftreten kann, verhindert. Die Aufnahmebohrungen/Einstecklöcher bewirken eine weitere Sicherheit gegen Beschädigung, Schmutz und einer bei Verstellung der Bremse (z. B. bei Nässe) möglichen Drehung.

Indem der Stecker nicht durch die Öffnung der Kabelführung hindurchpasst, ergibt sich weiterhin eine Straffung der Windungen, die durch die vorhandene Bremse gehalten werden kann.

Die beiden Halbschalen können durch Schrauben verbunden sein, wobei die Schrauben ohne Muttern durch die Halbschalen geschraubt werden können, z. B. als selbstschneidende Schrauben und/oder Holzschrauben und/oder Blechschrauben.

Die Erfindung wird im Folgenden anhand der beiliegenden Zeichnungen an einigen Ausführungsformen erläutert. Es zeigen:

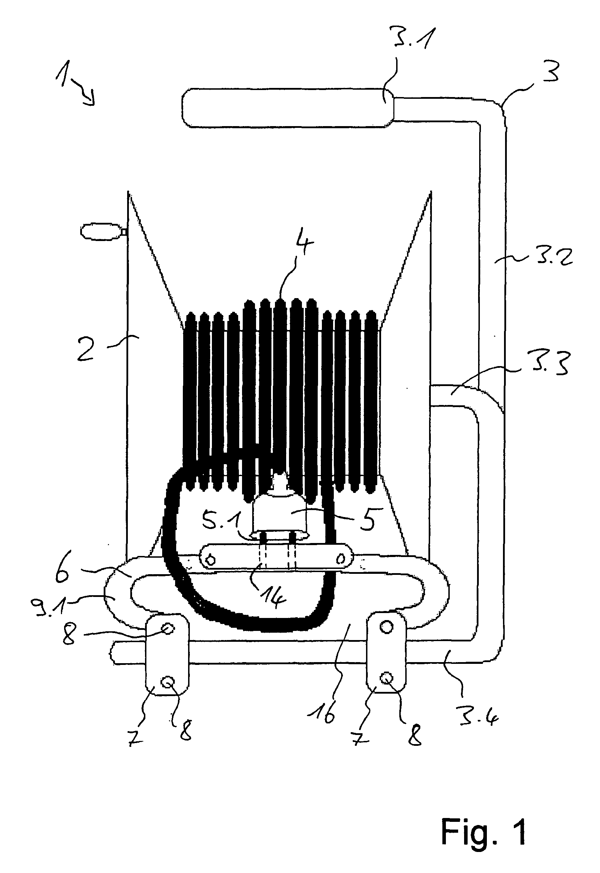

- Fig. 1: eine Vorderansicht einer Kabeltrommel mit der montierten erfindungsgemäßen Kabelführung;
- Fig. 2: eine Draufsicht auf die erfindungsgemäße Kabelführung;
- Fig. 3: eine Seitenansicht der Kabelführung;
- Fig. 4: eine auseinander gezogene Darstellung der Kabelführung aus Fig. 3;

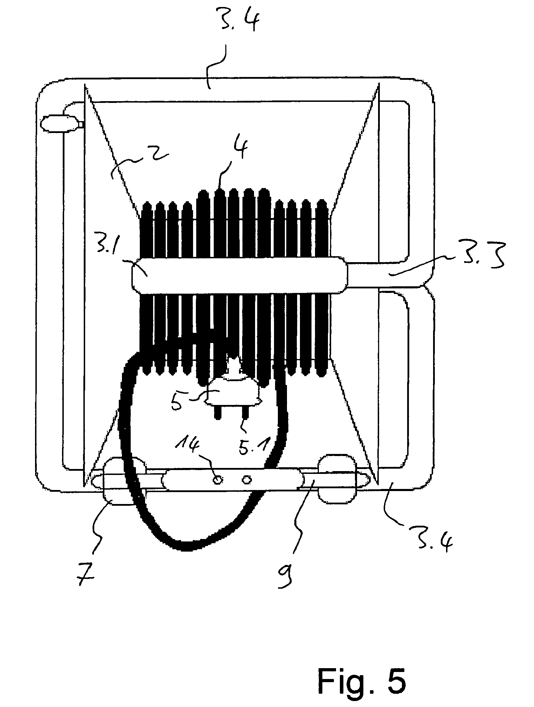

- Fig. 5: eine Draufsicht auf die Kabeltrommel aus Fig. 1.
- Fig. 6: eine weitere Ausführungsform mit zusätzlicher Bremse in Vorderansicht;

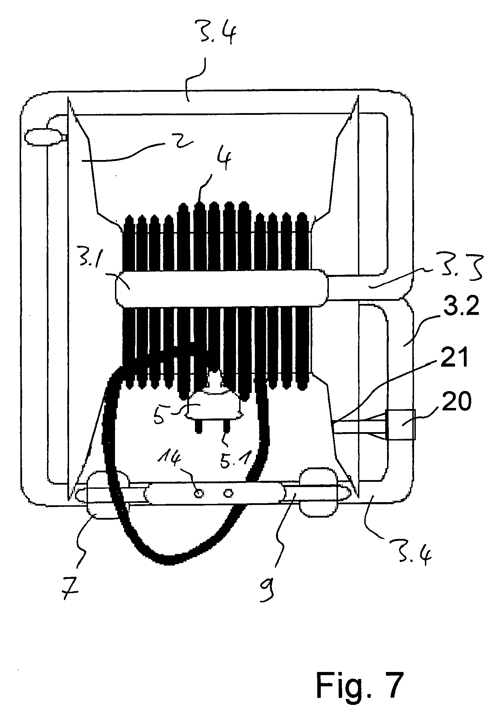

- Fig. 7: die Ausführungsform aus Fig. 6 in Draufsicht.

Eine Kabeltrommel 1 weist eine Haspel 2 aus z.B. Kunststoff und ein Gestell 3 aus z.B. Stahl auf. Das Gestell 3 kann insbesondere aus gebogenen Rohren ausgebildet sein und weist einen Griff 3.1 mit z.B. einer Kunststoffummantelung, ein oder mehrere seitliche Stangen 3.2, eine von der seitlichen Stange 3.2 abgehende Achse 3.3, auf der die Haspel 2 drehbar gelagert ist und z.B. zwei Standfüße 3.4 auf, die sich horizontal erstrecken.

Auf der Haspel 2 kann ein Schlauch oder eine Kabel 4 mit einem Stecker 5 aufgewickelt sein; bei der gezeigten Ausführungsform ist es ein Kabel 4.

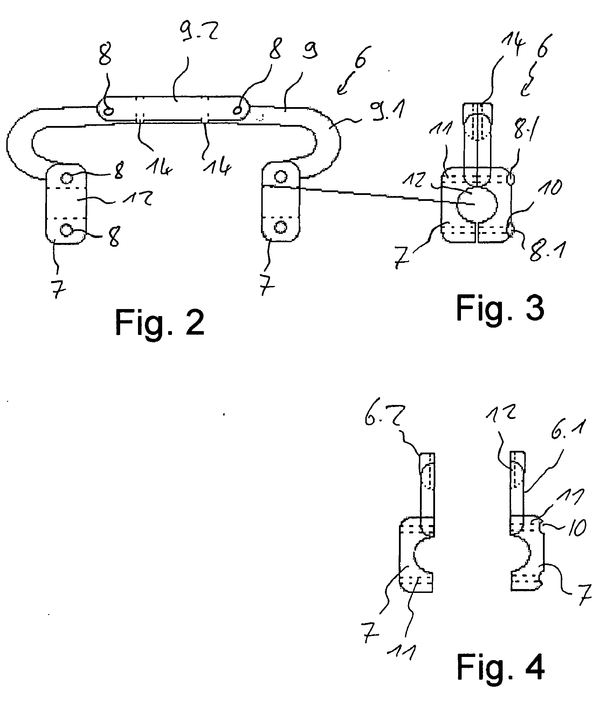

Erfindungsgemäß ist eine Führung 6, bei der gezeigten Ausführungsform eine Kabelführung 6 vorgesehen, durch die ein vorderes Ende des Kabels 4 mitsamt dem Stecker 5 gesteckt ist. Die Kabelführung 6 ist gemäß der auseinander gezogenen Darstellung der Fig. 4 aus zwei, vorzugsweise ganz oder weitgehend identischen Halbschalen 6.1 und 6.2 aus z. B. einem Kunststoff hergestellt und weist zwei Befestigungsmittel 7, nämlich Befestigungsschellen 7 auf, die um einen vorderen Standfuß 3.4 gelegt sind.

Die Halbschalen 6.1 und 6.2 sind vorzugsweise über Schrauben 8 miteinander verbunden. Hierbei können z.B. jeweils zwei Schrauben 8 durch die Befestigungsschellen 7 und weiterhin zwei Schrauben 8 in einem oberen Bügelbereich 9 eingesetzt sein. Die Schrauben 8 können mit Senkköpfen 8.1 ausgebildet sein, bzw. es sind Vertiefungen 10 in der vorderen Halbschale 6.1 zur Aufnahme der Schraubenköpfe 8.1 vorgesehen. Indem die Schraubenbohrungen 11 entsprechend mit kleinem Durchmesser ausgearbeitet sind, so dass die Schrauben 8 beim Einsetzen in das Material der Halbschalen 6.1 und 6.2 eingedreht werden, sind grundsätzlich keine Muttern zur Aufnahme der Schrauben 8 erforderlich. Alternativ hierzu können grundsätzlich aber auch Schrauben mit Gewinde und entsprechenden Muttern zur Aufnahme der Gewinde vorgesehen sein.

Der die beiden Befestigungsschellen 7 verbindende Bügelbereich 9 steht vorteilhafterweise mit seinen Rundungsbereichen 9.1 gegenüber den Befestigungsschellen 7 in seitlicher Richtung vor. In den Rundungsbereichen 9.1 kann das Kabel 4 bzw. der Schlauch beim Auf- und Abwickeln ohne Beschädigung geführt werden, wobei weiterhin eine definierte Position des Kabels 4gewährleistet wird, insbesondere bei einer Zugbelastung von der Seite her. Der gesamte Bügelbereich 9 weist somit z.B. die Form eines C auf, an dessen Enden die Befestigungsschellen 7 sich einstückig anschließen und nach unten abstehen.

Durch die Befestigungsschellen 7 sind jeweils fluchtende Bohrungen 12 zur Aufnahme des Standfußes 3.4 vorgesehen, z.B. mit Durchmesser 18 mm.

Der Bügelbereich 9 kann eine Verdickung 9.2 aufweisen, in der die beiden Schrauben 8 eingesetzt sind. Weiterhin kann hier z.B. auch eine Bezeichnung, z.B. ein Firmenlogo des Herstellers angebracht werden.

Die erfindungsgemäße Kabelführung bildet somit mit dem Standfuß 3.4 eine geschlossene Öffnung 16 aus, aus der das Kabel 4 nicht seitlich ausgleiten kann. Vorteilhafterweise wird ein Durchtritt des Steckers 5 zugelassen.

Gemäß einer bevorzugten Ausführungsform sind in dem Bügel 9, insbesondere in der mittleren Verdickung 9.2, vertikal durchgängige Aufnahmebohrungen 14 mit Durchmesser z.B. 5,3 mm und einem Abstand von 18 mm vorgesehen, die zur Aufnahme der beiden Steckerstifte 5.1 des Steckers 5 dienen. Hierbei kann eine gewisse Klemmwirkung zwischen den Steckerstiften 5.1 und den Aufnahmebohrungen 14 ausgebildet sein, die jedoch grundsätzlich nicht erforderlich ist.

Die Aufnahmebohrungen 14 verlaufen somit jeweils in beiden Halbschalen 6.1 und 6.2; sie können bereits bei der Spritzguss-Herstellung der Halbschalen 6.1 und 6.2 hergestellt sein. Vorteilhafterweise werden sie jedoch erst nachträglich in den Bügelbereich 9 eingebohrt, nach dem die Halbschalen 6.1 und 6.2 zusammen gesetzt sind, um durch Toleranzen bedingte Fehlpassungen, die zu kleinen Kanten in den Aufnahmebohrungen 14 führen würden, zu vermeiden.

Zur Herstellung werden somit die beiden Halbschalen 6.1 und 6.2 z.B. durch ein Spritzgussverfahren identisch hergestellt bzw. es wird in eine Halbschale, z.B. die vordere Halbschale 6.1, nachträglich z.B. ein Firmenlogo eingepresst, so dass für beide Halbschalen die gleiche Spritzgussform verwendet werden kann. Die Schraubenbohrungen 11 können separat in jeder Halbschale 6.1 und 6.2, vorteilhafterweise jedoch nach dem Zusammensetzen der beiden Halbschalen 6.1 und 6.2 durchgängig ausgebildet werden, woraufhin gegebenenfalls die Vertiefungen 10 zur Aufnahme des Schraubenkörpers 8.1 ausgebildet werden.

Nachfolgend werden von oben die Aufnahmebohrungen 14 ausgebildet.

Die Kabelführung 6 wird mit ihren Befestigungsschellen 7 um den Standfuß 3.4 gesetzt, woraufhin die Schrauben 8 eingeschraubt werden.

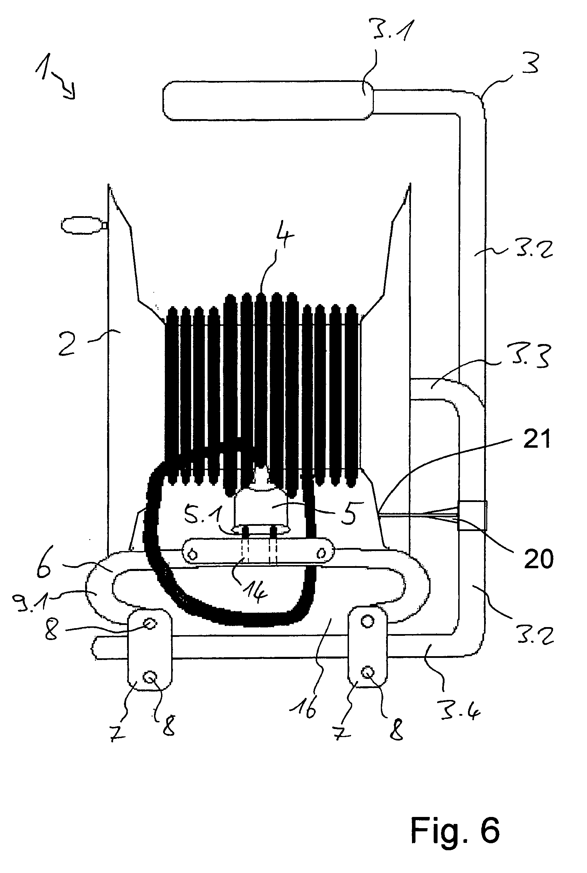

Bei der Ausführungsform der Fig. 6 ist an einer seitlichen Stange 3.2 eine Bremse 20 z. B. als Clip aus Kunststoff aufgesetzt und liegt in einer Fläche 21 an der Haspel 2 an, z. B. mit Klemmwirkung, um durch Reibung eine Drehung zu verhindern. Die Bremse 20 kann hierbei durch Verschieben an der Stange 3.2 gelöst und festgesetzt werden.

## Patentansprüche

1. Führung (6) für ein Kabel (4) oder einen Schlauch, zur Anbringung an einer Kabel- oder Schlauchtrommel (1), wobei die Führung (6) aufweist:
zwei Befestigungsmittel (7) zur Befestigung an einem in Querrichtung verlaufenden Standfuß (3.4) der Kabeltrommel (1),
einen Bügelbereich (9), zur Anlage des Kabels (4) oder Schlauchs,
wobei der Bügelbereich (9) die Befestigungsmittel (7) verbindet und zwischen dem Bügelbereich (9) und dem aufzunehmenden Standfuß (3.4) eine Durchlassöffnung (16) führ das Kabel (4) oder den Schlauch gebildet ist,
wobei die Kabelführung (6) aus zwei Halbschalen (6.1, 6.2) ausgebildet ist, die sich jeweils über den Bügelbereich (9) und die Befestigungsmittel (7) erstrecken.

2. Führung nach Anspruch 1, **dadurch gekennzeichnet, dass** sie als Kabelführung (6) zur Führung eines Kabels (4) ausgebildet ist und in dem Bügelbereich (9) zwei Aufnahmelöcher (14) zur Aufnahme der Steckerstifte (5.1) eines am Ende des Kabels (4) vorgesehenen Steckers (5) ausgebildet sind.

3. Führung nach Anspruch 2, **dadurch gekennzeichnet, dass** die Aufnahmelöcher (14) sich vertikal durch den Bügelbereich (9) erstrecken.

4. Führung nach Anspruch 2 oder 3, **dadurch gekennzeichnet, dass** die Aufnahmelöcher (14) vollständig durch den Bügelbereich (9) verlaufen.

5. Führung nach einem der Ansprüche 2 bis 4, **dadurch gekennzeichnet, dass** der Bügelbereich (9) eine mittlere Verdickung (9.2) aufweist, in der die Aufnahmebohrungen (14) für die Steckerstifte (5.1) und Schrauben (8) zur Verbindung der Halbschalten (6.1, 6.2) ausgebildet sind.

6. Führung nach einem der vorherigen Ansprüche, **dadurch gekennzeichnet, dass** die Befestigungsmittel (7) Befestigungsschellen (7) sind mit fluchtenden Bohrungen (12) zur Aufnahme eines Standfußes (3.4) der Kabeltrommel.

7. Führung nach einem der vorherigen Ansprüche, **dadurch gekennzeichnet, dass** der Bügelbereich (9) seitliche Rundungsbereiche (9.1) aufweist, die über die Befestigungsmittel (7) seitlich vorstehen.

8. Führung nach einem der vorherigen Ansprüche, **dadurch gekennzeichnet, dass** die Halbschalen (6.1, 6.2) identisch oder weitgehend identisch ausgebildet sind.

9. Führung nach Anspruch 8, **dadurch gekennzeichnet, dass** die Halbschalen (6.1, 6.2) identisch bis auf zusätzliche Einprägungen im Bügelbereich (9) ausgebildet sind.

10. Kabel- oder Schlauchtrommelanordnung mit einer Kabel- oder Schlauchtrommel (1) und einer montierten Führung (6) nach einem der vorherigen Ansprüche und einer an einer Stange (3.2) angebrachten, verstellbaren Bremse (20) zur Anlage an der Haspel (2).
